(19) Europäisches Patentamt / European Patent Office / Office européen des brevets

(11) EP 2 685 415 A1

(12) **EUROPEAN PATENT APPLICATION**

(43) Date of publication:
**15.01.2014 Bulletin 2014/03**

(51) Int Cl.:
**G06Q 30/02** *(2012.01)* **G06Q 50/00** *(2012.01)*

(21) Application number: **13174511.9**

(22) Date of filing: **01.07.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (71) Applicant: **Facebook, Inc.**<br>**Menlo Park, CA 94025 (US)**<br><br>(72) Inventor: **Zhou, Ding**<br>**Menlo Park, CA California 94025 (US)** |
| (30) Priority: **13.07.2012 US 201213549061** | (74) Representative: **Schröer, Gernot H.**<br>**Meissner, Bolte & Partner GbR**<br>**Bankgasse 3**<br>**90402 Nürnberg (DE)** |

(54) **Method for operating a social networking system in particular for search-powered connection targeting**

(57) A social networking system extends the reach of an ad by allowing an advertiser to seed a search for suggesting targeting criteria for an ad. Using the seeds, the social networking system identifies a set of seed objects from a social graph. The social networking system traverses the social graph to compute the similarity between the seed objects and candidate objects related to the seed objects. The social networking system then suggests to the advertiser a set of target objects based on the computed similarity. The social networking system receives a selection of target objects from the advertiser. And, using the selection, the social networking system determines one or more targeting criteria for the ad. Users with an edge to any of the selected target objects being eligible to receive the ad.

Receiving an ad associated with one or more seeds
402

Identifying one or more seed objects based on the received seeds
404

Computing similarity between one or more seed objects and plurality of other objects
406

Determine one or more candidate objects based on computed similarities
408

Presenting determined candidate objects to the advertiser
410

Receiving a selection of the one or more target objects for use in targeting
412

Determining one or more targeting criteria for the ad based on the selected target objects
414

**FIG. 4**

EP 2 685 415 A1

**Description**

**BACKGROUND**

This disclosure relates to a method for operating a social networking system, and in particular to creating targeting criteria for advertisements by seeding the search for objects in a social graph related to the targeting criteria.
Advertisers use social networking systems to deliver targeted advertisements ("ads") to users of the social networking system. In many cases, the extent to which an ad reaches a target group of users depends on the targeting criteria used to identify the target group. For example, to serve an ad promoting a newly released single for a new jazz vocalist from Portland, Oregon, advertisers may specify the following targeting criteria - male and females ages 26-30, interest in jazz, interest in the new jazz vocalist, and hometown somewhere in the Pacific Northwest.
Applying these targeting criteria, the social networking system identifies a set of users, and serves the ad. Specifying and applying targeting criteria in this manner, however, limits the reach of an ad by only specifying user characteristic. Without leveraging other information logged by the social networking system to target ads, social networking systems limit the ability of advertisers to extend the reach of ads to a larger group of users.

**SUMMARY**

It is therefore a problem to be solved by the invention to distribute advertising data to a larger group of users of a social networking system while keeping the computational resources for such increased data transfer low.
This object is achieved by the features of claim 1.
The method according to an embodiment of the invention is meant for operating a social networking system which comprises at least one computer, and comprises the steps of:

receiving from an advertiser via an interface of the social networking system one or more seeds for suggesting targeting criteria for an advertisement;
maintaining a social graph by the social networking system in a social graph module (108), the social graph including nodes connected by edges describing relationships between objects associated with the nodes;
identifying one or more seed objects in the social graph based on the received seeds;
computing, by means of the at least one computer of the social networking system, a similarity between one or more of the seed objects and objects associated with nodes in the social graph, the similarity between a seed object and an object based at least in part on a comparison of nodes in the social graph connected to both the object and to the seed object;
determining one or more candidate objects based on the computed similarities;
providing the determined candidate objects to the advertiser;
receiving a selection of one or more of target objects selected from the candidate objects for use in the targeting criteria for the advertisement; and
determining, by means of an Ad targeting module (120) of the social networking system, one or more targeting criteria for the advertisement based on the selected target objects.

In an embodiment of the method one or more seeds comprises one or more objects associated with the advertisement, wherein object preferably comprise at least one of pages, groups, events, posts, comments, and content.
In a further embodiment the one or more seeds comprise one or more keywords associated with the advertisement.
In a further embodiment the one or more seeds comprises a list of users.
Preferably identifying the seed objects comprises receiving the seed objects from the advertiser.
In a preferred and advantageous embodiment the method further comprises normalizing the computed similarity based on the number of interactions for each user.
In a preferred and advantageous embodiment the method further comprises computing the similarity S by comparison of two nodes x and y in accordance with: $S(x,y) = |N(x) \cap N(y)|/|N(x) \cup N(y)|$, where $N(x)$ represents a number of nodes pointing to node $x$ and $N(y)$ represents a number of nodes pointing to node $y$.
In yet another embodiment the method comprises the steps of:

computing the similarity between the selected target objects and a second plurality of candidate objects in the social networking system, the similarity based at least in part on a comparison of users of a social networking system who have interacted with both the selected target objects and the second plurality of candidate objects and users who have not interacted with both the selected target objects and the second plurality of candidate objects;
selecting a second set of target objects from the second plurality of candidate objects based on the computed similarities;

providing the selected second set of target objects to the advertiser;

receiving a selection of one or more of the second set of target objects for use in the targeting criteria for the advertisement; and

determining one or more additional targeting criteria for the advertisement based on the selected second set of target objects.

A further embodiment of the method comprises the steps of: for a viewing user, providing the advertisement for display to the viewing user based on the viewing user being in a targeting cluster of users, wherein the targeting cluster of users having an edge to one of the selected objects.

Preferably the targeting criteria is whether a user interacted with (liked, watched, etc.) the object.

According to another embodiment of the invention, to enable advertisers to extend the reach of an ad, a social networking system allows an advertiser to seed a search of the social networking system for targeting criteria for the ad. The targeting criteria specifies one or more characteristics of social networking system to which the advertiser seeks to serve the ad. In one embodiment, the seed comprises one or more keywords associated with the ad by the advertiser. The social networking system identifies seed objects associated with the seed from a social graph maintained by the social networking system. The social graph comprises nodes representing users or other objects in the social networking system, with edges connecting nodes to represent interactions and/or relationships between the objects in the social networking system. Hence, the seed objects may be pages associated the seed, events associated with the seed, groups associated with the seed, status updates by users associated with the seed or any other object in the social networking system associated with the seed.

Using the seed objects, the social networking system identifies additional candidate objects related to the seed objects. In one embodiment, the social networking system traverses the social graph to identify candidate objects based on the similarity between objects and a seed object. In one embodiment, a similarity between a seed object and an object is determined based on a number of nodes in the social graph connected to both a node associated with the seed object and to a node associated with the object. The social networking system presents a set of the candidate objects to the advertiser based on the similarity. For example, candidate objects having at least a threshold similarity to the seed object are presented to the advertiser. The social networking system receives one or more target objects that the advertiser selects from the set of candidate objects and determines one or more targeting criteria for the ad using the one or more target objects so that users with an edge to any of the target objects are eligible to receive the ad.

In an embodiment, to further extend the reach of an ad to users of the social networking system, the social networking system iteratively searches the social graph for additional candidate objects responsive to received selections from the advertiser. The social networking system traverses the social graph to identify additional candidate objects based on similarity between the target objects and objects in the social graph. The social networking system presents a set of the additional candidate objects to the advertiser, allowing one or more of the additional candidate objects to be selected as additional target objects.

In some cases, this process described above repeats, generating additional candidate objects based on the selection of target objects by the advertiser until the social networking system receives an indication from the advertiser that selection of target objects is complete. Responsive to receiving the selection completion indication, the social networking system determines targeting criteria for the ad based on the target objects selected by the advertiser. Users with an edge to at least one of the selected target objects are eligible to receive the ad.

## BRIEF DESCRIPTION OF THE DRAWINGS

FIG. 1 illustrates a high level block diagram of a process of targeting ads to users of a social networking system by seeding the search for suggesting targeting criteria for the ad, in an embodiment.

FIG. 2 illustrates a network diagram of a system for targeting ads to users of a social networking system by seeding the search for suggesting targeting criteria for the ad, in an embodiment.

FIG. 3 illustrates an example of a social graph, in accordance with an embodiment.

FIG. 4 illustrates a flowchart of a process of targeting ads to users of a social networking system by seeding the search for suggesting targeting criteria for the ad, in an embodiment.

The figures depict various embodiments for purposes of illustration only. One skilled in the art will readily recognize from the following discussion that alternative embodiments of the structures and methods illustrated herein may be employed without departing from the principles of this disclosure.

**DETAILED DESCRIPTION**

Overview

A social networking system offers its users the ability to connect and interact with other users and objects of the social networking system. Through these connections and interactions, users in turn, gain access to information and services relevant to them based on information the user elects to share with the social networking system. For example, information and content shared by users helps the social networking system connect users interested in particular goods or services with merchants offering those goods or services. As users become more socially connected, the social networking system discovers and presents other connections to users based on the information and content shared by the users. Using these insights unique to the social networking system, users receive information about goods, services, events, causes, or other interests relevant to them that they might not have otherwise discovered.

Users may be an individual or any other entity, such as a business or other non-person entity. A social networking system object may be a social networking system user or a non-person object. A non-person object includes a content item (e.g., image, video, photo, or shared link), group (e.g., users with similar interests), social networking system page, event, message (e.g., status update, post, news feed item, chat, text, or e-mail), concept, or other suitable data. Other social networking system objects include, for example, photo album, application, check-in, comment, friend list, shared link, order, question, user profile, or likes.

Users join the social networking system and add connections to other users to whom they desire to be connected. Users provide information describing them, such as name, age, gender, education history, employment history, hometown, relationship status, and interests. The social networking system, in turn, stores this information in a user profile associated with the respective user.

Using information stored in user profiles combined with other information about user interactions internal to and external to the social networking system, the social networking system provides information and services relevant to its user. For example, the social networking system may target ads relevant to a user based on interest expressed by the user, connections the user shares with another social networking system object, or more generally, similarity between the user and another social networking system object.

To better organize and access social information, social networking systems maintain social information in a social graph. Social information maintained in a social graph generally includes the interaction and/or relationship between objects in the social networking system. Structurally, the social graph comprises a plurality of nodes interconnected by a plurality of edges.

In operation, when a first user connects with a second user in the social networking system, the users are represented by nodes, and the connection represented by one or more edges connecting the nodes. Actions taken by the users such as when the first user sends a message to the second user, or tags the second user in a picture stored by the social networking system, are represented by additional edges between the nodes. In this example, both the message and tagging are represented as edges between the nodes representing the first and second users. A message or picture associated with the first or second user may be represented by nodes that are connected by edges to the nodes representing the first and second user.

In an embodiment, the social graph also includes custom graph object types and graph action types. Custom graph object types and graph action types, in some case are defined by third-party developers, and in other case defined by administrators of the social networking system. For example, a graph object for a music album may have several defined object properties, such as a title, artist, producers, year, and the like. In turn, a graph action type describing interactions with the music album object may include "purchase" or "listen." These action types may be used by a third-party developer on a website external to the social networking system to report custom or other actions performed by users of the social networking system on custom graph objects. Being "open," the social graph enables third-party developers to create and use the custom graph objects and actions on external websites.

Third-party developers enable users of the social networking system to express interest in web pages hosted on websites external to the social networking system. These web pages may be represented as custom graph objects in the social networking system as a result of embedding a widget, a social plug-in, programmable logic or code snippet into the web pages, such as an inline Frame (iFrame). Enabling third-party developers to define custom object types and custom action types is described further in "Structured Objects and Actions on a Social Networking System," U.S. Application No. 13/239,340 filed on September 21, 2011, which is hereby incorporated by reference. Any concept that can be embodied in a web page may become a node in the social graph on the social networking system in this manner.

Social networking systems provide mechanisms for users to interact with other users and objects within and external to the social networking system. In an embodiment, mechanisms utilize a web-based interface comprising a series of inter-connected pages displaying and allowing users to interact with social networking system objects and information. For example, a social networking system may display a page for each social networking system user. The page may include objects and information entered by or related to the social networking system user (e.g., the user's "profile").

A social networking system user interface may be accessible from a web browser or a non-web browser application, such as a dedicated social networking system mobile device or computer application. Accordingly, "page" as used herein may be a web page, an application interface or display, a widget displayed over a web page or application, a box or other graphical interface, an overlay window on another page (whether within or outside the context of a social networking system), or a web page external to the social networking system with a social networking system plug in or integration capabilities.

Pages may include content such as pictures or videos, and communications or social networking system activity to, from, or by other users. Pages also include links to other social networking system pages, and in some cases, additional capabilities, such as search, real-time communication, content-item uploading, purchasing, advertising, and any other web-based technology or ability. More generally, pages may be associated with concepts, or groups.

In another embodiment, mechanisms to interact with the social networking system utilize a web-based interface for interacting with an advertising user to determine targeting criteria for ad. For example, the interface receives from the advertising user one or more seeds for seeding a search for connections to one or more target objects for use in suggesting the targeting criteria for the ad. The interface allows the advertising user the ability to select objects from among a set of target objects identified by the social networking system as being related to the seeds. The interface refreshes the selection of objects with a different or an additional set of related objects based on the selection, and without further user intervention. The interface also provides the advertising user the ability to define the set of select objects for use in the targeting criteria by indicating when the selection of objects is complete.

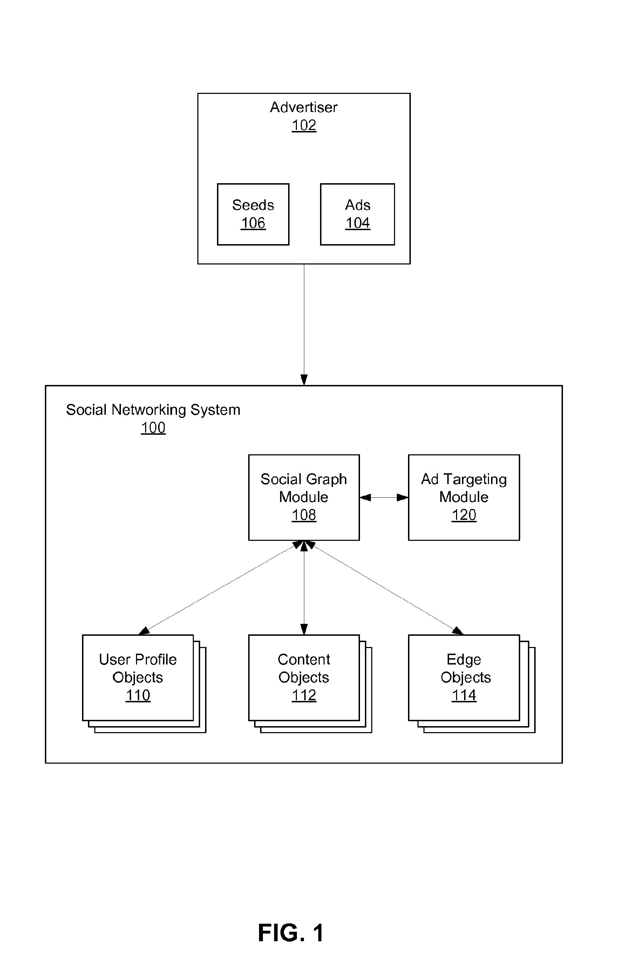

The structural and informational aspects of the social graph enable the social networking system to analyze the relationship between a pair of nodes and any set of nodes. In an embodiment, in analyzing the relationship between nodes, the social networking system determines the similarity between nodes to identify objects related to an initial search seed for suggesting targeting criteria for an ad. Similarity may be determined by any number of methods, including degree of proximity, and the similarity of the neighbors associated with the compared nodes. And, as will be described in greater detail in reference to FIGS. 1-5, the social networking system, in some embodiments, iteratively searches for and identifies connections to similar nodes using the social graph, to help advertisers engage with more connections in the social networking system to target ads.

FIG. 1 illustrates a high level block diagram of a process of targeting ads to users of a social networking system by seeding the search for suggesting targeting criteria for the ad, in an embodiment. Exemplary social networking system 100 includes advertiser 102 that provides ad object 104 to social networking system 100. Generally, social networking system 100 maintains different types of objects representing entities, for example, ad objects 104, user profile objects 110, content objects 112, and edge objects 114. To help advertiser 102 seed the search for objects on a social graph related to the ad, social networking system 100 also includes target objects 116 identified by social networking system 100 as being related to the seeds, and selected objects 118 identified by advertiser 102 as being relevant for use in suggesting targeting criteria for the ad. Generally, an object may be stored for each instance of the associated entity.

In an embodiment, ad object 104 includes an ad and one or more seeds for use in suggesting targeting criteria for the ad. An ad generally includes a communication intended to cause the recipient of the communication to take some action concerning a product or service. Actions include, for example, purchasing, inquiring for additional information, or simply becoming aware of a product or service.

In an embodiment, advertiser 102 sends ad object 104 to social networking system 100 separately from seeds 106. Seeds 106 generally include information associated with the ad that provide a basis for searching social information in social networking system 100 for objects related to the ad. Social networking system 100 enables the seeds to be as specific or as a broad as desired by the advertiser.

In an embodiment, seeds 106 include seed objects, such as pages, events, posts, comments, content, or groups related to the ad. For example, seed objects for suggesting targeting criteria to serve an ad for a new coffee blend may include pages associated with an advertising user associated with the ad, comments from users such as "I like coffee" or "Let's meet for coffee," events at a merchant location associated with the advertising user offering free samples of the new coffee blend, or a post in a user news feed indicating plans to try the new blend. In an embodiment, seeds 106 also include one or more keywords associated with the ad, such as "coffee," the advertising user's name, or a competitor's name. Seeds 106 further include user information, such as a list of social networking users. More generally, the list includes user names or other unique identifiers for social networking users.

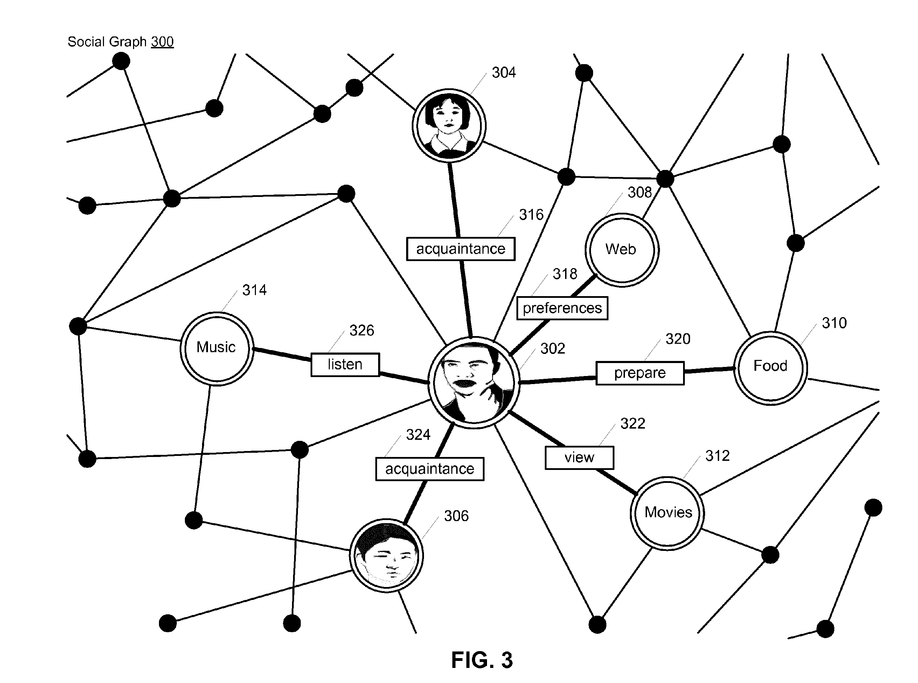

Social networking system 100 also includes social graph module 108 for receiving seeds 106 from advertiser 102, suggesting one or more target objects 116 related to seeds 106 to advertiser 102, and providing a set of selected objects 118 from target objects 116 to ad targeting module 120 to serve ads in accordance with the selected targeting criteria. To identify target objects 116, social graph module 108 receives social information describing social networking system objects and the interactions between those objects, and organizes this social information as a social graph. Social networking system 100 gathers social information about social networking system objects from user profile objects 110, content objects 112, and edge objects 114. Social graph module 108, in turn, structurally represents these objects and the interactions between them in a social graph as further described in reference to Figure 3.

User profile objects 110 include information describing a user of social networking system 100. User information includes biographic, demographic, education history, employment history, and other describing the user. Content objects 112 include any type of object on social networking system 100, such as a music album including songs listened to by a user, page post, status update, photo, video, shared link, application, and check-in event at a merchant or venue. That is, content objects 112 include any object acted upon by a user on social networking system 100. Interactions between a user and content objects 112 generate edge objects 114. Edge objects 114 describe information about the interaction, including identifying information about the user, content object 112, and the type of action performed.

In an embodiment, social networking system 100 also populates the social graph with one or more custom graph objects from a website external to social networking system 100. For example, a custom graph object includes a song located on a music streaming service website, a video located on video streaming service website, or an application located on either of these websites for streaming content to a user. In an embodiment, social networking system 100 receives a communication via a social plug-in, widget, or snippet, of an interaction between a user and the song. In turn, social networking system 100 captures the song as a custom graph object and the interaction (e.g., listen, purchase, download, recommend, etc.) between the user and the song as a custom edge object. In the social graph each object is represented by a node, and the each edge object is represented as a connection between the nodes corresponding to the interacting objects.

Ad targeting module 120 receives ad object 104 from advertiser 102, and selected objects 118 from social graph module 108 to generate one or more targeting criteria for serving the ad to users of social networking system 100. In an embodiment, targeting criteria includes a user interaction with one or more selected objects 118. For example, targeting criteria includes user interactions with objects, such as indicating a preference, purchasing, commenting, listening, attending or planning to attend, inviting, checking-in, and viewing. Targeting criteria also includes user interactions, such as tagging an image, playing an online game.

## System Architecture

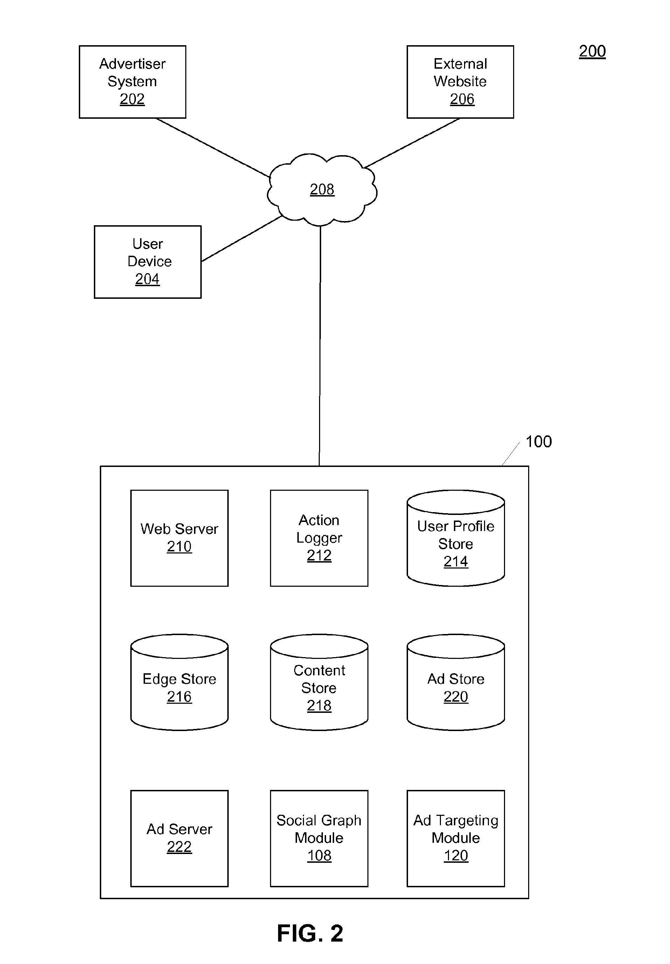

FIG. 2 illustrates a network diagram of a system for targeting ads to users of a social networking system by seeding the search for suggesting targeting criteria for the ad, in an embodiment. The system includes social networking system 100, advertiser system 202, user device 204, and external website 206, coupled to communicate over network 208. The exemplary system may be organized in an alternative topology or configuration, and include different and/or additional modules sufficient to cause the system to target ads to users of social networking system 100 by seeding the search for suggesting targeting criteria for the ad.

Social networking system 100 includes web server 210, action logger 212, user profile 214, edge store 216, content store 218, ad store 220, social graph module 108, ad targeting module 120, and ad server 222. In other embodiments, the social networking system 100 includes additional, fewer, or different modules for various applications. Conventional components such as network interfaces, security functions, load balancers, failover servers, management and network operations consoles, and the like are not shown so as to not obscure the details of the system.

Web server 210 links social networking system 100 via the network 208 to one or more user devices 204, advertiser system 202, and external website 206. Web server 210 serves web pages, as well as other web-related content, such as Java, Flash, XML, and so forth. Web server 210 provides the functionality to receive from advertiser 102 seeds for use in suggesting targeting criteria for an ad, and to provide seed and target objects to advertiser 102 for selecting and determining targeting criteria for the ad. Web server 210 also provides the functionality to search and route messages between social networking system 100 and user device 204. For example, to communicate with user device 204 to serve and ad based on the determined targeting criteria, web server 210 exchanges information over network 208 using, instant messages, queued messages (e.g., email), text and SMS (short message service) messages, or messages sent using any other suitable messaging technique.

Network 208 uses standard communications technologies and/or protocols to facilitate communication between social networking system 100, advertiser system 202, user device 204, and external website 206. For example, network 208 includes wired and/or wireless links using technologies, such as Ethernet, 802.11 family of standards, worldwide interoperability for microwave access (WiMAX), 3rd Generation Partnership Project (3GPP) family of standards, CDMA, digital subscriber line (DSL), etc. Similarly, the networking protocols supported on network 208 include multiprotocol label switching (MPLS), transmission control protocol/Internet protocol (TCP/IP), User Datagram Protocol (UDP), hypertext transport protocol (HTTP), simple mail transfer protocol (SMTP), and file transfer protocol (FTP). The data exchanged over network 208 can be represented using technologies and/or formats including the hypertext markup language (HTML) and the extensible markup language (XML). In addition, all or some of links can be encrypted using conventional encryption technologies, such as secure sockets layer (SSL), transport layer security (TLS), and Internet Protocol Security (IPsec).

Action logger 212 receives communications from the web server 210 about user actions on and/or off the social networking system 100. To build a social graph to capture these user actions, action logger 212 logs information about these actions in an action log. Such actions include actions with objects internal to social networking system 100, such as, adding a connection to the other user, sending a message to the other user, uploading an image, reading a message from the other user, viewing or listening to content associated with another user or social networking system object, attending an event posted by another user, among others. Action logger 212 also logs user actions external to social networking system 100, such as interactions with an external website indicating a preference for content on the website, viewing streaming media from a content streaming service provider, and purchasing a song for download based on a recommendation of another social networking system user. Action logger 212 captures data about these user interactions to help social networking system users receive information, ads, and other services relevant the user based on information the user elects to share with social networking system 100.

Social networking system 100 stores user account information and other related information for a user in the user profile store 214. The user profile information stored in user profile store 214 describes the users of social networking system 100, including biographic, demographic, and other types of descriptive information, such as work experience, educational history, gender, hobbies or preferences, location, and the like. The user profile may also store other information provided by the user, for example, images or videos. In certain embodiments, images of users may be tagged with identification information of users of social networking system 100 displayed in an image. User profile store 206 also maintains references to the actions stored in an action log and performed on objects.

Edge store 216 stores the information describing connections between users and other objects on the social networking system 100. Some edges may be defined by users, allowing users to specify their relationships with other users. For example, users may generate edges with other users that parallel the users' real-life relationships, such as friends, co-workers, partners, and so forth. Other edges are generated when users interact with objects in social networking system 100, such as expressing interest in a page on the social networking system, sharing a link with other users of the social networking system, and commenting on posts made by other users of the social networking system. Edge store 216 stores edge objects that include information about the edge, such as affinity scores for objects, interests, and other users. Social networking system 100 computes affinity scores over time to approximate a user's affinity for an object, interest, and other users in the social networking system 100 based on the actions performed by the user. Multiple interactions between a user and a specific object may be stored in one edge object in edge store 214, in one embodiment. For example, a user that plays multiple songs from Tito Puente's album, "El Rey Bravo," may have multiple edge objects for the songs, but only one edge object for Tito Puente.

Social graph module 108, as previously described, organizes this social information stored on social networking system 100 into a social graph. In operation, social graph module 108 receives seeds 106 for suggesting to advertiser 102 objects for use in determining targeting criteria for an ad. Using the seeds, social graph module 108 identifies an initial set of objects (i.e., seed objects) related to the seeds. In an embodiment, seeds 106 include one or more keywords, and social graph module 108 maps the keywords to one or more seed objects related to the keywords. For example, when receiving a keyword "coffee," social graph module 108 may apply a semantic analysis operation or machine learning operation to map the keyword "coffee" to objects related to coffee, such as posts referring to coffee, and pages of an advertising user associated with coffee brands. In a similar manner, social graph module 108 maps user information (e.g., a list of user names) to seed objects. Alternatively or additionally, social graph module 108 maps objects received from advertiser system 202 to seed objects. For example, social graph module 108 maps an offer for a free coffee to seed objects related to coffee as previously described.

Using the seed objects, social graph module 108 searches for objects related to the seed objects for use in suggesting and determining targeting criteria. For example, to search for objects related to seed objects, social graph module 108 computes the similarity between one or more seed objects and a plurality of candidate objects. Similarity may be determined in several ways. For example, similarity may be computed by comparing users of social networking system 100 who have interacted with both the seed objects and the candidate objects and users who have not interacted with both the seed objects and the candidate objects. In another example, similarity may be computed for nodes A and B, by determining the number of nodes pointing to both A and B at the same time, normalized by the neighbors of either of nodes A or B in accordance with the following equation:

$$S(x,y) = |N(x) \cap N(y)|/|N(x) \cup N(y)| \qquad \text{Equation (1)}$$

where $N(x)$ represents the number of nodes pointing to node $x$ and $N(y)$ represents the number of nodes pointing to node $y$.

To reduce computation resources used to seed objects with an increasingly large volume of candidate objects, social graph module 108 may apply one or more techniques to filter the objects of social networking system 100 based on the seed and/or seed objects before computing similarity. For example, to filter the number of objects, social module 108 identifies one or more clusters of related objects by accessing one or more indexes describing information stored in user profile store 214, content store 218, and edge store 216. In an embodiment, information in these stores may are indexed according one or more data dimensions, such as topically (e.g., "coffee"), demographically, connection type, etc.

Social graph module 108 selects one or more target objects for display to advertisers 102 based on the computed similarities. To aid advertiser in determining targeting criteria for the ad, social graph module 108 provides the selected target objects to advertiser 102. In providing the selected target objects, social graph module may choose a set of target objects for selection by advertiser 102 based on one or more factors to reduce the number of targets to a number suitable for display based on the type of advertiser system 202. Factors considered in reducing the number of target objects include the extent of similarity between target objects, object type, or connection type.

In an embodiment, social graph module 108 sends the selected target objects to ad targeting module 120 for use in suggesting targeting criteria for the ad. In another embodiment, social graph module selects another set of target objects based on the first set of target objects selected by advertiser 102 in a similar manner as described with reference to selecting the initial target objects. That is, social graph module 108 iteratively changes target objects presented to advertiser 102 for selection based on which objects advertiser 102 selects as being relevant to the ad.

Using the selected target objects received from social graph module 108, ad targeting module 120 determines one or more targeting criteria for the ad. In an embodiment, ad targeting module 120 selects for targeting criteria whether a user interacted with (e.g., liked, watched, listened, purchased, recommended, etc.) the object. Additionally, ad targeting module 120 selects for targeting criteria the number of times a user interacted with the object. In another embodiment, ad targeting module 120 applies targeting criteria received from advertiser 102 or a third-party (e.g., marketing analytics service).

Ad server 222 serves ads, embodied in ad objects 104 stored in ad store 220 to users of the social networking system 100. For a viewing user, ad server 222 serves the ad for display to the viewing user based on the viewing user being in a targeting cluster of users. The targeting cluster of users, for example, includes users having an edge to one of the selected objects. In one embodiment, ad server 222 serves ads to external website 206 based on targeting criteria received via the ad targeting module 120. In another embodiment, the ad server 222 serves ads that include content items posted by users of the social networking system 100 that are sponsored by an advertiser. For example, a user may create a check-in event at a Starbucks Coffee shop in San Francisco, California that is shared with other users connected to the user. An advertiser for Starbucks may highlight that check-in event in the other users' feeds by creating an ad based on the check-in event that is targeted to the other users connected to the user.

Advertiser system 202 comprises one or more computing devices to receive user input and to transmit and receive data via the network 208. In one embodiment, advertiser system 202 is a conventional computer system executing, for example, a Microsoft Windows-compatible operating system (OS), Apple OS X, and/or a Linux distribution. Advertiser system 202 interfaces with social networking system 100 through a web-based interface seeding the search for objects on a social graph related to the ad. For example, the interface includes one or more dialog boxes to receive seeds from advertiser 102, a lists of seed objects identified based on the received seeds, a list of target objects 116 related to the seed objects, and a means for advertiser 102 to select target objects 116. Such a means includes indicating a selection using a selection box, dragging or otherwise moving an item from a list into another region of the interface, and clicking on an item in the list.

In an embodiment, the interface also refreshes the list of target objects 116 based on objects selected by advertiser 102 as being relevant to a targeting criteria associated with the ad. To indicate a change in the list of target objects 116, the interface includes new objects in a different region of the interface, or otherwise displays the items in an manner that is easily identifiable by advertiser 102 (e.g., adding a visual indicator, displaying the object in a different color, font size, font type, or other formatting characteristic).

Advertiser 102 interacts with social networking system 100 to create and manage one or more pages in the social network to provide a forum for social networking users that have a common interest in the activities of the advertising user. In an embodiment, advertiser 102 creates multiple pages hosted on external website 206. A page may be created for various merchant locations or store fronts associated advertiser 102. For example, Starbucks may create and/or manage a page for each of the over 17,000 Starbucks retail stores worldwide. In another example, a brand-owner, such as Coca-Cola Company may create a page for products (e.g., Coca-Cola®, Diet Coke®, etc.) or product lines (e.g., soft drinks, energy drinks, and sports drinks).

External website 206 includes a graph object for a social networking user to act upon using user device 204. An interaction between the user and the graph object are communicated to social networking system 100, using, for example, a social plug-in, widget, or code snippet. Social networking system 100 observes this interaction, and in turn, stores the graph object and the user as nodes on a social graph. Social networking system 100 also stores on the social graph the interaction between the graph object and the user as an edge between the nodes. For example, a user, using user device 204, executes a "play" action of a song by Esperanza Spalding, "Little Fly," by accessing external website 206, which hosts of a digital music service. Social networking system 100 captures the song as a graph object, and the interaction between the user and the graph object as an edge between a node associated with the user and another node associated with the song object. In this example, social networking system 100 also captures edges between the user and sub objects related to the song, such as artist - Esperanza Spalding, and album - Chamber Music Society.

In an embodiment, user device 204 includes a computing device with similar components and functionality as described in reference to advertiser system 202. In another embodiment, user device 204 is a mobile computing device, such as a mobile phone, smart-phone, tablet device, or other device suitable to interact with social networking system 100 and/or external website 206 via network 208. Generally, user device 204 executes one or more applications to receive an ad from social networking system 100, or otherwise interact with the social networking system 100. In an embodiment, user device 204 interacts with the social networking system 100 through an application programming interface (API) that runs on the native operating system of the user device 204, such as iOS and ANDROID™.

Social Graph

FIG. 3 illustrates an exemplary social graph, in accordance with an embodiment. Exemplary social graph 300 includes nodes 302, 304, 306, 308, 310, 312, and 314 representing a variety of social networking system objects that can act on and/or be acted upon by another node. Nodes 302, 304, and 306 represent user objects. Node 308 represents a page object associated with an external website. Node 310 represents a recipe object from a cooking application. Node 312 represents a video object (e.g., a movie) from a video streaming application, and node 314 represents a song object from a music streaming application.

An edge between nodes in a social graph represents a particular kind of connection between the nodes. For example, an acquaintance 316 connection type connects nodes 302 and 304, and nodes 302 and 306. In another example, a preference 318 connection type connects node 302 with node 308. Connections also result from an action performed by one of the nodes on the another node. For example, the user object represented by node 302 performs the action "prepare" 320 for the recipe associated with the object corresponding to node 310. Similarly, the user object represented by node 302 performs the action of "listen" 326 for the song associated with the object corresponding to node 314, and "view" 322 for the movie associated with object corresponding to node 312. Other actions may include listing social networking system objects in a user profile, subscribing to or joining a social networking system group or fan page, sending a message to another social networking system user, making a purchase associated with a social networking system node, commenting on a content item, or RSVP'ing to an event.

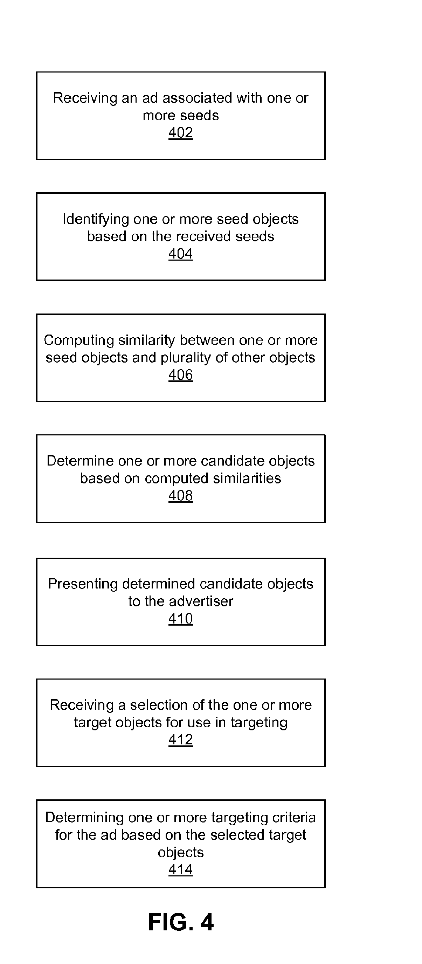

FIG. 4 illustrates a flowchart of a process of targeting ads to users of a social networking system by seeding the search for suggesting targeting criteria for the ad, in an embodiment. Social networking system 100 receives 402 an ad along with information for seeding the suggestion of targeting criteria for the ad. For example, social networking system 100 receives the ad as an ad object 104, along with one or more seeds for use in suggesting targeting criteria for the ad. In another example, the ad and the seeds may be received separately.

Using the received seeds, social networking system 100 identifies 404 one or more seed objects. For example, in the case where the received seeds are seed objects, social networking system 100 identifies 404 one or more seed objects by receiving received the seeds. In another example, where the received seeds are keywords related to the ad, social networking system 100 identifies seed objects by mapping the keywords to one or more seed objects related to the keywords. In an embodiment, social networking system 100 maps the keywords to seed objects by performing a semantic analysis operation or machine learning operation to map keywords to objects related to the keywords. In a similar manner, social networking system 100 maps user information to seed objects.

To identify objects related to the seed objects, social networking system 100 computes similarity between the seed objects and a plurality of candidate objects. In an embodiment, social networking system 100 discovers candidate objects (i.e., related objects) by traversing the social graph to identify nodes representing objects that are similar to the seed objects. Similar nodes include, among other things, nodes with similar neighbors (i.e., common links), and nodes within a specified proximity (e.g., within a co-linking distance of three degrees of separation) on the social graph. For example, in an embodiment, social networking system 100 computes the similarity by comparing users of social networking system 100 who have interacted with both the seed objects and the candidate objects and users who have not interacted with both the seed objects and the candidate objects. In this example, social networking system 100 may compute the similarity between nodes on a social graph, in accordance with the following equation, as previously described:

$$S(x,y) = |N(x) \cap N(y)|/|N(x) \cup N(y)| \qquad \text{Equation (1)}$$

In an embodiment, social networking system 100 applies one or more techniques to filter the candidate objects to reduce computational resources used to compute similarity. For example, social networking system 100 filters the number of candidate objects by grouping or clustering like objects, and selecting one or more objects from these groups or clusters based on ranking or weighting assigned to the objects within the group or cluster. In an embodiment, social networking system 100 identifies one or more clusters of related objects by accessing one or more indices describing information stored in social networking system 100. For example, social networking system 100 may cluster objects related to coffee into pages, posts, and actions (e.g., check-in at Starbucks) using information stored in user profile store 214, edge store 216, and content store 218.

Social networking system 100 then selects 408 one or more target objects for display to advertisers 102 based on the computed similarities. In an embodiment, social networking system 100 selects a set of the target objects for display with the highest computed similarity. In another embodiment, social networking system 100 selects a set of the target objects for display with the highest computed similarity for a range of object types. For example, for an ad promoting a new song, social networking system 100 selects for display five objects with the highest computed similarity from each of content objects (e.g., songs by the same artist), users objects (e.g., users that indicated an interest for the song, album, or artist), application objects (e.g., streaming music services providing the song for listening), and page objects related to the song (e.g., fan page on the artist's website, page for a club featuring the artist at an upcoming concert, and a page for a coffee shop offering the artist's album for sale).

In another embodiment, social networking system 100 selects a set of the target objects for display based on a preference indicated by advertiser 102. For example, advertiser 102 specify using the web-based interface the number, type, and threshold computed similarity of target objects selected for display. In another embodiment, social networking system 100 selects a set of the target objects for display in a random manner, or in a manner to best fit the display constraints of advertiser system 202. Social networking system 100 then provides 410 the selected target objects to advertiser 102 for selection.

In an embodiment, advertiser 102 iteratively selects objects by selecting objects and receiving additional recommendations from social networking system 100 based on each selection suggestion. And, with each iteration social networking system 100 helps advertisers refine targeting criteria to engage with more connections in social networking system 100 for the target ad.

Social networking system 100 receives 412 an indication of a completed selection of target objects from advertiser 102, and in turn, determines 414 one or more targeting criteria for the ad based on the selected objects. For example, targeting criteria include whether a user interacted with (e.g., liked, watched, listened, purchased, recommended, etc.) the object, and the number of times a user interacted with the object.

In an embodiment, using the selected objects, social networking system 100 uses the social graph to determine a target audience to receive the ad. To determine the audience, social networking system 100 traverses the social graph to identify user objects corresponding to nodes on the social graph that have an edge to one of the nodes corresponding to a selected object. These users forming a targeting cluster of users to receive the ad. After determining the targeting cluster of users, social networking system serves the ad to the targeting cluster of users.

Summary

The foregoing description of the embodiments has been presented for the purpose of illustration; it is not intended to be exhaustive or to limit the embodiment to the precise forms disclosed. Persons skilled in the relevant art can appreciate that many modifications and variations are possible in light of the above disclosure.

Some portions of this description describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments also relate to an apparatus for performing the operations herein. This apparatus may be particularly constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments also relate to a product that is produced by a computing process described herein. Such a product may comprise information resulting from a computing process, where the information is stored on a non-transitory, tangible computer readable storage medium and may include any embodiment of a computer program product or other data combination described herein.

Further Subject-matter which can be claimed: Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims:

Embodiment 1

A method comprising:

receiving from an advertiser via an interface of a social networking system one or more seeds for suggesting targeting criteria for an advertisement;

identifying one or more seed objects in a social graph maintained by the social networking system based on the received seeds, the social graph including nodes connected by edges describing relationships between objects associated with the nodes;

computing a similarity between one or more of the seed objects and objects associated with nodes in the social graph, the similarly between a seed object and an object based at least in part on a comparison of nodes in the social graph connected to both the object and to the seed object;

selecting one or more target objects from the candidate objects based on the computed similarities;

providing the selected target objects to the advertiser;

receiving a selection of one or more of the target objects for use in the targeting criteria for the advertisement; and

determining one or more targeting criteria for the advertisement based on the selected target objects.

Embodiment 2

The method of Embodiment 1, wherein the one or more seeds comprises one or more objects associated with the advertisement.

Embodiment 3

The method of Embodiment 2, wherein object comprise at least one of pages, groups, events, posts, comments, and content.

Embodiment 4

The method of Embodiment 1, wherein the one or more seeds comprise one or more keywords associated with the advertisement.

Embodiment 5

The method of Embodiment 1, wherein the one or more seeds comprises a list of users.

Embodiment 6

The method of Embodiment 1, wherein identifying the seed objects comprises receiving the seed objects from the advertiser.

Embodiment 7

The method of Embodiment 1, further comprising normalizing the computed similarity based on the number of interactions for each user.

Embodiment 8

The method of Embodiment 1, further comprising computing in accordance with: $S(x,y) = |N(x) \cap N(y)|/|N(x) \cup N(y)|$, where $N(x)$ represents a number of nodes pointing to node $x$ and $N(y)$ represents a number of nodes pointing to node *y.*

Embodiment 9

The method of Embodiment 1, further comprising:
computing the similarity between the selected target objects and a second plurality of candidate objects in the social networking system, the similarly based at least in part on a comparison of users of a social networking system who have interacted with both the selected target objects and the second plurality of candidate objects and users who have not interacted with both the selected target objects and the second plurality of candidate objects;
selecting a second set of target objects from the second plurality of candidate objects based on the computed similarities;
providing the selected second set of target objects to the advertiser;
receiving a selection of one or more of the second set of target objects for use in the targeting criteria for the advertisement; and
determining one or more additional targeting criteria for the advertisement based on the selected second set of target objects.

Embodiment 10

The method of Embodiment 1, further comprising:
for a viewing user, providing the advertisement for display to the viewing user based on the viewing user being in a targeting cluster of users, wherein the targeting cluster of users having an edge to one of the selected objects.

Embodiment 11

The method of Embodiment 1, wherein the targeting criteria is whether a user interacted with (liked, watched, etc.) the object.
**[0093]** [0082] Finally, the language used in the specification has been principally selected for readability and instructional purposes, and it may not have been selected to delineate or circumscribe the inventive subject matter. It is therefore intended that the scope of the disclosure be limited not by this detailed description, but rather by any claims that issue on an application based hereon. Accordingly, the disclosure of the embodiments is intended to be illustrative, but not limiting, of the scope of the disclosure, which is set forth in the following claims.

**Claims**

1. A method for operating a social networking system (100) comprising at least one computer, the method comprising:

    receiving from an advertiser via an interface of the social networking system one or more seeds for suggesting targeting criteria for an advertisement;
    maintaining a social graph by the social networking system in a social graph module (108), the social graph including nodes connected by edges describing relationships between objects associated with the nodes;
    identifying one or more seed objects in the social graph based on the received seeds computing, by means of the at least one computer of the social networking system, a similarity between one or more of the seed objects and objects associated with nodes in the social graph, the similarity between a seed object and an object based at least in part on a comparison of nodes in the social graph connected to both the object and to the seed object;
    determining one or more candidate objects based on the computed similarities;
    providing the determined candidate objects to the advertiser;
    receiving a selection of one or more of target objects selected from the candidate objects for use in the targeting criteria for the advertisement; and
    determining, by means of an Ad targeting module (120) of the social networking system, one or more targeting criteria for the advertisement based on the selected target objects.

2. The method of claim 1, wherein the one or more seeds comprises one or more objects associated with the advertisement.

3. The method of claim 2, wherein object comprise at least one of pages, groups, events, posts, comments, and content.

4. The method of any of claims 1 to 3, wherein the one or more seeds comprise one or more keywords associated with the advertisement.

5. The method of any of claims 1 to 4, wherein the one or more seeds comprise a list of users.

6. The method of any of claims 1 to 5, wherein identifying the seed objects comprises receiving the seed objects from the advertiser.

7. The method of any of the preceding claims, further comprising normalizing the computed similarity based on the number of interactions for each user.

8. The method of any of the preceding claims, further comprising computing the similarity S by comparison of two nodes x and y in accordance with:

$S(x,y) = |N(x) \cap N(y)|/|N(x) \cup N(y)|$, where $N(x)$ represents a number of nodes pointing to node x and $N(y)$ represents a number of nodes pointing to node $y$.

9. The method of any of claims 1 to 8, further comprising:

computing the similarity between the selected target objects and a second plurality of candidate objects in the social networking system, the similarity based at least in part on a comparison of users of a social networking system who have interacted with both the selected target objects and the second plurality of candidate objects and users who have not interacted with both the selected target objects and the second plurality of candidate objects;
selecting a second set of target objects from the second plurality of candidate objects based on the computed similarities;
providing the selected second set of target objects to the advertiser;
receiving a selection of one or more of the second set of target objects for use in the targeting criteria for the advertisement; and
determining one or more additional targeting criteria for the advertisement based on the selected second set of target objects.

10. The method of any of claims 1 to 9, further comprising:

for a viewing user, providing the advertisement for display to the viewing user based on the viewing user being in a targeting cluster of users, wherein the targeting cluster of users having an edge to one of the selected objects.

11. The method of any of claims 1 to 10, wherein the targeting criteria is whether a user interacted with (liked, watched, etc.) the object.

```
                    ┌─────────────────────────────────┐
                    │           Advertiser            │
                    │              102                │
                    │                                 │
                    │   ┌──────────┐   ┌──────────┐    │
                    │   │  Seeds   │   │   Ads    │    │
                    │   │   106    │   │   104    │    │
                    │   └──────────┘   └──────────┘    │
                    └─────────────────────────────────┘
                                   │
                                   ▼
    ┌────────────────────────────────────────────────────────────┐
    │  Social Networking System                                  │
    │             100                                            │
    │                                                            │
    │           ┌──────────────┐      ┌──────────────┐           │
    │           │ Social Graph │◄────►│ Ad Targeting │           │
    │           │   Module     │      │   Module     │           │
    │           │    108       │      │    120       │           │
    │           └──────────────┘      └──────────────┘           │
    │                                                            │
    │     ┌──────────┐    ┌──────────┐    ┌──────────┐           │
    │     │User      │    │ Content  │    │  Edge    │           │
    │     │Profile   │    │ Objects  │    │ Objects  │           │
    │     │Objects   │    │  112     │    │  114     │           │
    │     │ 110      │    │          │    │          │           │
    │     └──────────┘    └──────────┘    └──────────┘           │
    └────────────────────────────────────────────────────────────┘
```

# FIG. 1

200

| Advertiser System 202 | | External Website 206 |

208

| User Device 204 |

100

| Web Server 210 | Action Logger 212 | User Profile Store 214 |

| Edge Store 216 | Content Store 218 | Ad Store 220 |

| Ad Server 222 | Social Graph Module 108 | Ad Targeting Module 120 |

**FIG. 2**

Social Graph 300

304

acquaintance 316

Web 308

preferences 318

314

Music

listen 326

302

prepare 320

Food 310

324

acquaintance

view 322

Movies 312

306

FIG. 3

EP 2 685 415 A1

16

Receiving an ad associated with one or
more seeds
402

Identifying one or more seed objects
based on the received seeds
404

Computing similarity between one or more
seed objects and plurality of other objects
406

Determine one or more candidate objects
based on computed similarities
408

Presenting determined candidate objects
to the advertiser
410

Receiving a selection of the one or more
target objects for use in targeting
412

Determining one or more targeting criteria
for the ad based on the selected target
objects
414

# FIG. 4

Europäisches
Patentamt

European
Patent Office

Office européen
des brevets

# EUROPEAN SEARCH REPORT

Application Number

EP 13 17 4511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/205057 A1 (HOOK RODNEY [US] ET AL) 12 August 2010 (2010-08-12) * paragraph [0002] - paragraph [0010] * * paragraph [0042] - paragraph [0098]; claim 1; figures * | 1-11 | INV. G06Q30/02 G06Q50/00 |
| X | US 2008/294607 A1 (PARTOVI ALI [US] ET AL) 27 November 2008 (2008-11-27) * paragraph [0012] - paragraph [0079]; claims; figures * | 1-11 | |
| X | US 8 185 558 B1 (NARAYANAN SRINIVAS [US] ET AL) 22 May 2012 (2012-05-22) * column 17, line 20 - line 37; claim 1; figures * | 1-11 | |
| X | US 2011/137932 A1 (WABLE AKHIL [US]) 9 June 2011 (2011-06-09) * paragraph [0008] - paragraph [0038]; figures * | 1-11 | |
| | | | TECHNICAL FIELDS SEARCHED (IPC) G06Q |

The present search report has been drawn up for all claims

| Place of search | Date of completion of the search | Examiner |
|---|---|---|
| Munich | 13 November 2013 | Blackley, William |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                EP 13 17 4511

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2013

| Patent document cited in search report | Publication date | Patent family member(s) | Publication date |
|---|---|---|---|
| US 2010205057 A1 | 12-08-2010 | NONE | |
| US 2008294607 A1 | 27-11-2008 | NONE | |
| US 8185558 B1 | 22-05-2012 | US 8185558 B1<br>US 2012221581 A1 | 22-05-2012<br>30-08-2012 |
| US 2011137932 A1 | 09-06-2011 | US 2011137902 A1<br>US 2011137932 A1<br>US 2012290562 A1<br>US 2013173607 A1 | 09-06-2011<br>09-06-2011<br>15-11-2012<br>04-07-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 23934011 A